# EUROPÄISCHE PATENTSCHRIFT

(11) **EP 0 344 600 B1**
(45) Veröffentlichungstag und Bekanntmachung des Hinweises auf die Patenterteilung: **31.03.1993**
(21) Anmeldenummer: 89109348.6
(22) Anmeldetag: 24.05.1989
(51) Int. Cl.: C21C 5/28, C21C 5/46

(54) **Verfahren zur Schrottzusatzerhöhung durch Vorwärmen von Schrott im Konverter**
Process for increasing scrap addition by preparing the scrap in the converter
Procédé pour augmenter l'addition de ferraille par un préchauffage de cette ferraille dans le convertisseur

(30) Priorität: 03.06.1988 DE 3819031
(43) Veröffentlichungstag der Anmeldung: 06.12.1989
(73) Patentinhaber: KLÖCKNER STAHL GMBH, 47057 Duisburg (DE)
(72) Erfinder: Langhammer, Hans Jürgen, Dr.-Ing., D-2863 Ritterhude (DE)

(56) Entgegenhaltungen:
- EP-A- 0 059 289
- FR-A- 2 272 179
- GB-A- 2 011 477
- GB-A- 2 142 655
- US-A- 3 839 017
- PATENT ABSTRACTS OF JAPAN, Band 10, Nr. 276 (C-373)[2832], 19 September 1986#

## Beschreibung

Die Erfindung betrifft ein Verfahren zur Schrottsatzerhöhung bei Konverterverfahren (LD, OBM oder dgl.) durch Vorwärmen von Schrott im Konverter. Ferner betrifft die Erfindung einen Konverter mit Vorwärmbrennern oberhalb des Badspiegels.

Der Schrottsatz ist bei den herkömmlichen Konverterverfahren z.B. LD oder OBM ohne zusätzliche Maßnahmen bei etwa 30 % begrenzt. Aus wirtschaftlichen Gründen ist die Erhöhung des Schrottsatzes wünschenswert, vor allem dann, wenn der Preisunterschied zwischen dem eigenerzeugten Roheisen und dem Fremdschrott hoch ist.

Die Schrottvorwärmung als Mittel zur Schrottsatzerhöhung im Konverter ist nach dem Stand der Technik bekannt, allerdings hat sich diese Verfahrensweise nicht entscheidend durchsetzen können. Trotz der verfahrenstechnischen Schwierigkeiten ist dennoch der wirtschaftliche Anreiz für eine effektive Schrottsatzerhöhung über eine wirkungsvolle Schrottvorwärmung außerordentlich hoch. Bis zu Schrottvorwärmtemperaturen von 1000 °C ist die Verzunderung des Schrottes noch in akzeptablen Grenzen zu halten, auch wenn wegen des Wärmegefälles innerhalb der Schüttung mittlere Vorwärmtemperaturen von 800 °C realistischer sein dürften. Bei diesen Vorwärmtemperaturen sind dann Schrottsätze von um oder über 50 % möglich, womit sich die Einsatzflexibilität der Konverterverfahren entscheidend verbessern läßt.

Die nach dem Stand der Technik bekannten Gefäßformen für Konverter sind für das Roheisenfrischen optimiert worden; diese Formen sind jedoch weit weniger günstig für die Schrottvorwärmung. Es ist daher auch wenig sinnvoll, Vorwärmsysteme zu übernehmen, die sich beispielsweise beim Herdfrischen, d.h. bei ganz anderen Ofenformen bewährt haben. Das gilt in erster Linie für wassergekühlte, verbrennungsoptimierte Einschmelzbrenner, wie sie in SM-bzw. in Elektroöfen Verwendung finden.

Leichter oder schwerer Schrott ergibt im Konverter unterschiedliche Füllhöhen, so daß für realistische Schrottschüttgewichte von 0,8 bis 2 t/m³ das übliche Konvertervolumen ausreicht, um Schrottsätze von über 50 % bei einmaligem vorherigen Chargieren einzusetzen. Als Brennstoff für die Vorwärmung kommt in erster Linie Erdgas, mit gewissen Einschränkungen auch Öl in Frage. Um hohe Verbrennungstemperaturen zu erzeugen bzw. in kürzester Zeit ein hohes Wärmegefälle wirksam werden zu lassen, wird vorzugsweise mit Sauerstoff oder hoch angereicherter Sauerstoffverbrennung verbrannt.

Insbesondere ist es nach dem Stand der Technik bekannt, das Schrottvorwärmen von oben über eine separate wassergekühlte Lanze mit aufwendigem Brennerkopf zur großflächigen Flammenbeaufschlagung durchzuführen. Der Mangel dieses Verfahrens zeigt sich in der sehr ungünstigen Wärmeübertragung, da die Schüttung nicht durchströmt wird und die Durchwärmung durch die Flammenstrahlung bei geringer Eindringtiefe sehr schlecht ist.

Demgegenüber ist das nach dem Stand der Technik ebenfalls bekannte Schrottvorwärmen von unten bzw. vom Konverterboden aus wärmetechnisch günstiger, hat jedoch den Nachteil, daß die Vorwärmbrenner während der späteren Frischphase unter flüssigem Stahl und hohem ferrostatischen Druck funktionsfähig bleiben müssen und nicht zulaufen dürfen. Daraus ergeben sich ganz erhebliche Einschränkungen für die eigentliche Funktion als Brenner, d.h. es handelt sich im eigentlichen Sinne hierbei um Unterbaddüsen, die als Brenner betrieben bzw. umfunktioniert werden. Damit die Zulaufgefahr gering bleibt, müssen die Zufuhrquerschnitte gering und die Austrittsdrücke hoch sein, was lange, spitze Flammen ergibt, die in die Schüttung in kürzester Zeit lange, schmale Kanäle brennen und wenig später oben ungenutzt austreten. Hinzu kommt, daß die sich unten sumpfartig ansammelnden eingeschmolzenen Schrottanteile mit der hohen Austrittsgeschwindigkeit der Verbrennungsgase hochgeschleudert und im Sauerstoffstahl stark oxidiert werden und dabei außerhalb der Konvertermündung schwere Ansätze bilden können. Im übrigen müssen diese Brenner eine Doppelfunktion erfüllen, nämlich das Vorwärmen und das spätere Frischen. Daher ist man dazu gezwungen, den Düsencharakter sehr viel stärker in den Vordergrund zu stellen als den von Brennern, was zu gravierenden Nachteilen während des Vorwärmens führt.

Es ist aus der FR-A-22 72 179 zwar bereits ein Konverter mit Vorwärmbrennern oberhalb des Badspiegels bekannt, wobei die Vorwärmbrenner Parallelstrahl-Ringspalt-Brenner mit äußerer Erdgas- und innerer Sauerstoffzuführung sind, die von der Seite gegenüberliegend um den Zapfen herum im unteren Bereich des Konverters über dem Badspiegel der stehenden flüssigen Metallschmelze angeordnet sind. Die dort verwendeten Brenner sind jedoch nicht in der Lage, eine großflächige Flammenbeaufschlagung durchzuführen. Hieraus ergibt sich eine sehr ungünstige Wärmeübertragung, da in die Schüttung lediglich lange schmale Kanäle gebrannt werden.

Es ist daher Aufgabe der vorliegenden Erfindung, ein Verfahren und eine Vorrichtung der eingangs genannten Art anzugeben, das die folgenden Forderungen erfüllt: Die verwendeten Brenner sollen
- trotz des einfachen Aufbaus und der Notwendigkeit des Zurückbrennens mit der ff.-Zustellung eine möglichst gute Flammenführung, Brennstoffmischung und flächendeckende Beaufschlagung der Schrottsäule ermöglichen,
- mit der verschleißenden Ausmauerung zurückbrennen,
- in kurzer Zeit eine hohe Energiebeaufschlagung gewährleisten,
- trotz der hohen Energiebeaufschlagung sicherheitsrisikolos betrieben werden,
- einfach und damit kostengünstig herstellbar sein,
- einfach und risikolos auswechselbar und während des Betriebes stillegbar sein,
- nach der Schrottvorwärmphase während der Konverterfrischphase über Sauerstofflanzen oder Bodendüsen möglichst aufwandlos betriebsbereit gehalten werden.

Diese Aufgabe wird dadurch gelöst, daß ungekühlte Parallelstrahl-Ringspalt- oder Parallelstrahl-Längsschlitz-Vorwärmbrenner mit äußerer Brennstoff- und innerer Sauerstoffzufuhr von der Seite gegenüberliegend um den Zapfen herum im unteren Bereich des Konverters über dem Badspiegel der stehenden flüssigen Metallschmelze die Schüttung erwärmen. Mit anderen Worten: die Erwärmung soll durch Brenner erfolgen, die im gegenüberliegenden, nicht vom stehenden Bad überspülten Wandbereich des Zapfens angeordnet sind und durch Auffächerung der Flammenführung den Einsatzquerschnitt möglichst gleichmäßig beaufschlagen.

Bei der vorliegenden Erfindung wird die Erkenntnis ausgenutzt, daß die Schrottvorwärmung im Konverter in dominierender Weise durch die Anordnung und die Ausbildung der Brenner bzw. der Brennstoffzuführung bestimmt wird. Die erfindungsgemäße Brennerausbildung und Brenneranordnung ermöglicht es, eine Vorwärmung der Einsatzsäule von unten durchzuführen, ohne daß die Gefahr besteht, daß die Brenner - auch bei der Drehung des Konverters - unterhalb des Badspiegels liegen. Durch die seitlich gegenüberliegende Anordnung und Brennerausbildung kann der ganze Querschnitt der Schrottsäule überstrichen werden. Die Vorwärmung des Schrottes über ungekühlte Seitenbrenner richtet sich nach dem zu fahrenden Gesamtschrottsatz, der Schrottsorte und der verfügbaren Vorwärmdauer. Im Normalfall wird die mittlere Vorwärmtemperatur ca. 800°C betragen, wobei sich ein Wärmegefälle von unten nach oben ergibt. Der Vorwärmzeitbedarf wird bis zu ca. 30 min. betragen, vorzugsweise aber unter 20 min. liegen. Nach der Vorwärmperiode wird das Roheisen gekippt, und die Brenner werden mit Stickstoff oder Luft zur Kühlung beaufschlagt.

Erfindungsgemäß werden im Hinblick auf eine den ganzen Querschnitt des Konverters abdeckende Flammenerzeugung mehrere zu einem Brennerbündel zusammengefaßte einzelne Ringspaltbrenner verwendet, die bzw. deren Zuführung jeweils seilartig gegeneinander verdrillt sind. Durch den dadurch erzeugten Dralleffekt je nach Grad der Verdrillung wird vermieden, daß sich eine lange, spitze Flamme bildet, vielmehr ergibt sich eine vorteilhafte Auffächerung der Flammenbeaufschlagung, die auch beim Zurückbrennen der Brenner mit der ff.-Zustellung wegen des gleichbleibenden Verdrillungswinkels voll erhalten bleibt.

Die beschriebene Wirkung kann auch dadurch erreicht werden, daß durch ein in einer Ebene über dem Badspiegel fächerartig gespreiztes Bündel von einzelnen Ringspaltbrennern mit äußerer Erdgas- und innerer Sauerstoffzuführung der Schrottschüttungsquerschnitt gleichmäßig flammenbeaufschlagt wird.

In einer anderen vorgeschlagenen Form der Brennerausbildung werden auf jeder Seite des Konverters je ein Längsschlitzbrenner angeordnet, bei denen der Strömungsquerschnitt in einer Ebene oberhalb des Bades fächerförmig gespreizt wird, wobei der äußere Strömungsquerschnitt mit Erdgas, der innere mit Sauerstoff beaufschlagt wird.

Werden die als ausgefächerte Ringspalt- oder Längsschlitz ausgebildeten Brenner in Richtung des Konverterbodens in die Konverterwand eingebaut, so ergibt sich weiterhin der Vorteil, daß die Flammengase unter Nutzung der Umkehrströmung den Schrott vorwärmen können.

Weiterhin wird vorgeschlagen, im Verlaufe des Chargenablaufes, während des Sauerstofffrischens über Badlanzen oder Bodendüsen die Brenner mit Spül- bzw. Kühlgasmengen offenzuhalten, wozu Stickstoff oder Luft verwendet wird.

Nach einer weiteren Ausgestaltung der Erfindung werden die CO-Nachverbrennung begünstigt und die Frischintensität dadurch erhöht, daß während des Sauerstofffrischens Luft oder Sauerstoff über die Brenner zugeführt wird. Im äußeren Ringspalt des Brenners wird dabei die für die Kühlung notwendige Menge an Erdgas zugeführt.

Die Aufgabe wird ferner durch den im Anspruch 9 bzw. 10 beschriebenen Konverter gelöst. Weiterbildungen sind in den Ansprüchen 11 und 12 beschrieben. Vorteile gegenüber den bisher nach dem Stand der Technik bekannten Verfahren ergeben sich insbesondere durch die spezielle Brenneranordnung und Brennerausgestaltung.

Ausführungsbeispiele der Erfindung sind in den Zeichnungen dargestellt. Es zeigen:
- Fig. 1 a bis 2b: jeweils Querschnittsansichten des erfindungsgemäßen Konverters und
- Fig. 3a bis 5b: jeweils Ansichten von aus mehreren Ringspaltbrennern Zusammengesetzten Brennerrohrbündeln,
- Fig. 6a bis 7b: jeweils in verschiedenen Ansichten Längsschlitzbrenner.

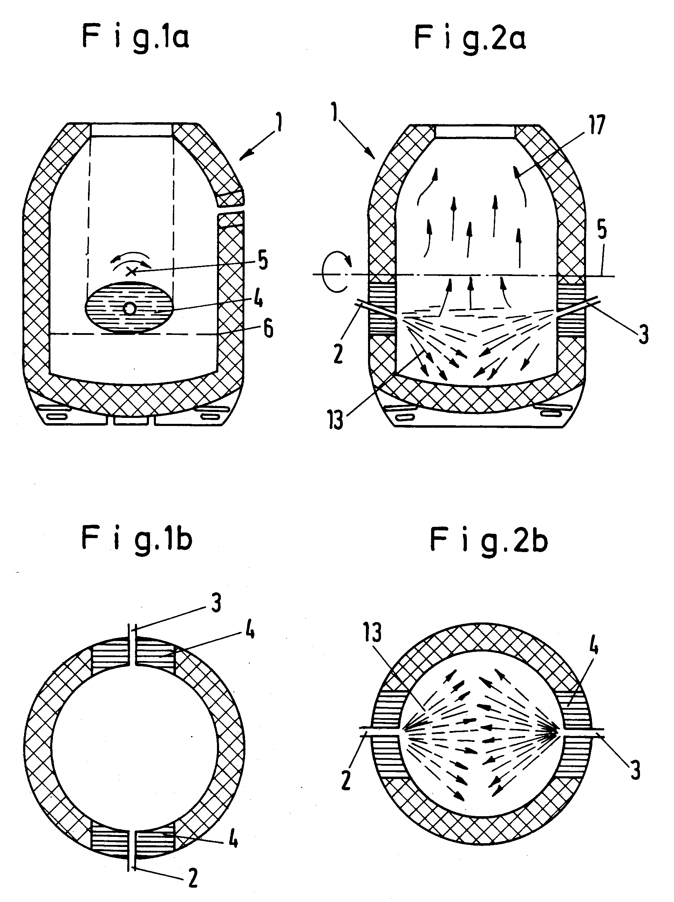

Der in Fig. 1a bis 2b dargestellte Konverter 1 ist im Prinzip nach dem Stand der Technik bekannt. Mit 4 ist der Zapfenbereich des Brenners bezeichnet, das ist der Bereich im unteren Teil der Schüttung, der in jeder Lage des Konverters oberhalb der Badoberfläche 6 liegt. Der Konverter 1 ist um die Dreh- bzw. Kippachse 5 in Richtung der jeweils dargestellten Pfeile dreh- bzw. kippbar. Die Beaufschlagung durch Flammen ist so gerichtet, daß diese flächendeckend über den ganzen Querschnitt des Konverters wirken. Dadurch, daß die Brenner 2 und 3 bzw. Brennerbündel 2 und 3 schräg nach unten gerichtet sind, können die umkehrenden Flammen 13 bzw. aufströmenden Gase 17 die gesamte Einsatzsäule durchdringen.

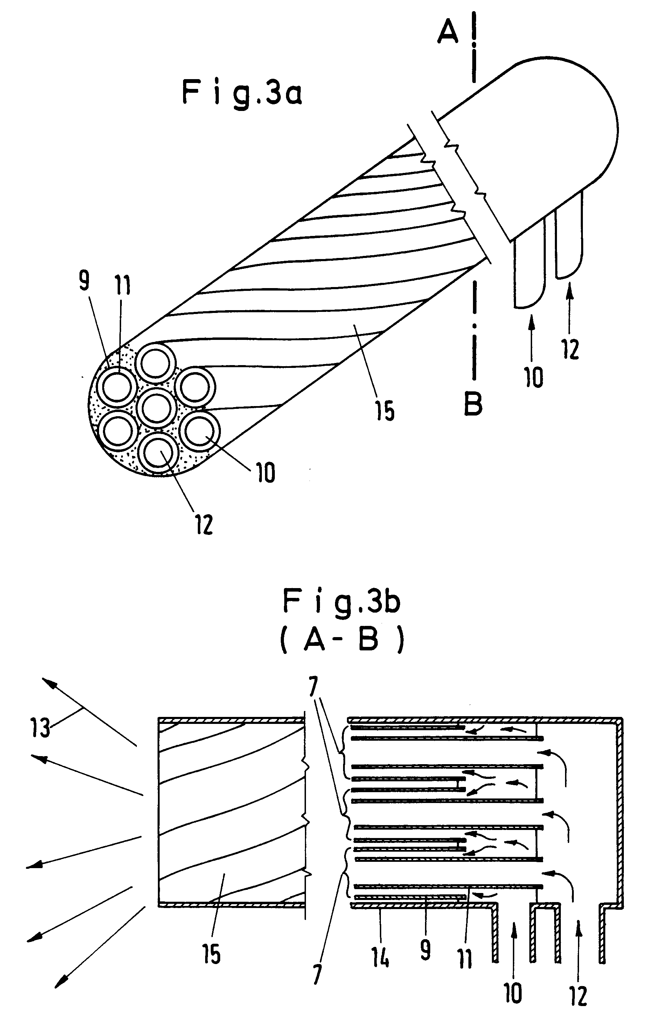

Fig. 3a bis 5b stellen jeweils Brennerbündel dar. Fig. 3a und 3b stellen Ansichten von Parallelstrahl-Ringspaltbrennern dar mit jeweiligen Zuführungen (12 für Sauerstoff und 10 für Erdgas). Die jeweiligen Ringspaltbrenner-Außenrohre 9 einschließlich der Innenohre 11 eines jeden einzelnen Brenners sind seilartig miteinander verdrillt, so daß das Erdgas wie der Sauerstoff wendelförmig zum Austrittsende geführt wird und einen dementsprechenden Drall bzw. ausgefächerten Austrittswinkel - angedeutet durch Bezugszeichen 15 - erhält.

Das in einem Rohr 14 zusammengefaßte Bündel besteht im vorliegenden Falle aus 7 Ringspaltbrennern 7, wovon in der Querschnittsansicht gemäß Fig. 3b drei sichtbar sind. Jeder dieser Brenner besitzt - wie vorher beschrieben - ein Innenrohr 11 und ein Außenrohr 9. Die Sauerstoff- bzw. Erdgaszufuhr wird über seitliche Stutzen (Kanäle 10 und 12) aufrechterhalten. Auch durch diese Verdrillung 15 ergibt sich eine fächerförmige Aufspaltung der Flamme 13.

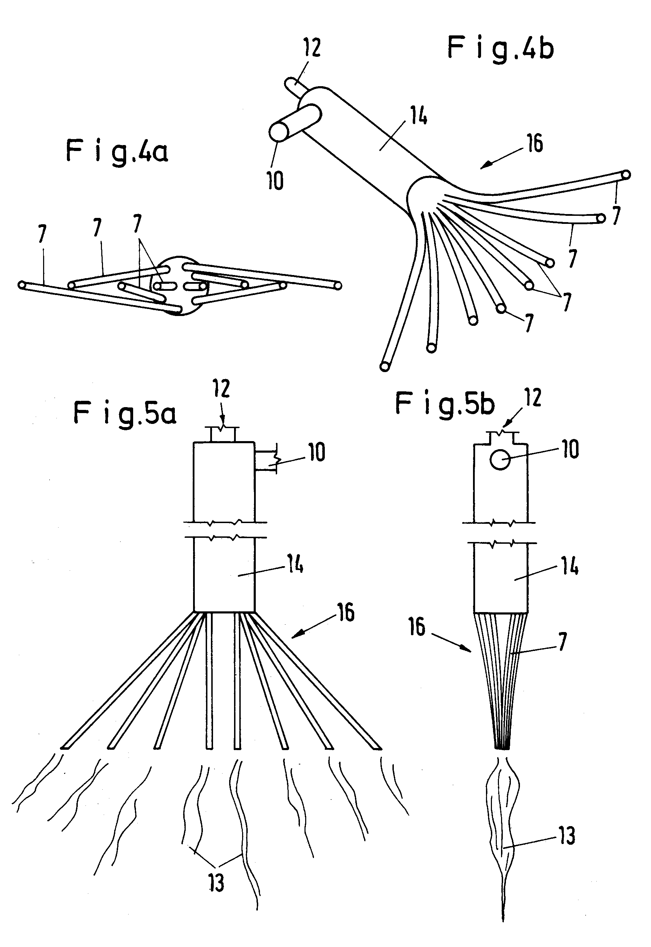

Die Auffächerung der Flammenstrahlen aus einem Ringspaltbrennerbündel kann - wie in Fig. 4a bis 4b dargestellt - in der Ebene erfolgen, wobei die im Bündel in einem Rohr 14 zusammengefaßten Brenner 7 in einer Ebene fächerartig auseinandergespreizt sind, so daß die einzelnen Ringspaltbrenner 7 in einer Reihe in gleichbleibender Richtung innerhalb der Zustellung geführt werden. Der Gesamtquerschnitt der Schrottschüttung im Konverter wird flammendeckend durch die gegenüber angeordneten aufgefächerten Bündelbrenner 16 beaufschlagt, wobei die Brenner vorzugsweise unterhalb des erweiterten Zapfenbereiches 4 angeordnet sind, der nicht unter dem stehenden Metallbad liegt und wobei die Brennerrichtung schräg nach unten gerichtet ist.

Das in Fig. 4a und 4b dargestellte Bündel besteht aus mehreren einzelnen Ringspaltbrennern 7, die gemeinsame Zuführungsöffnungen 12 bzw. 10 für die Sauerstoff- bzw. Erdgaszufuhr aufweisen. Die einzelnen Brenner 7 sind an der Brennervorderseite fächerartig gespreizt. Fig. 5a stellt eine Draufsicht gemäß Fig. 4a bzw. 4b, Fig. 5b eine Seitenansicht dar.

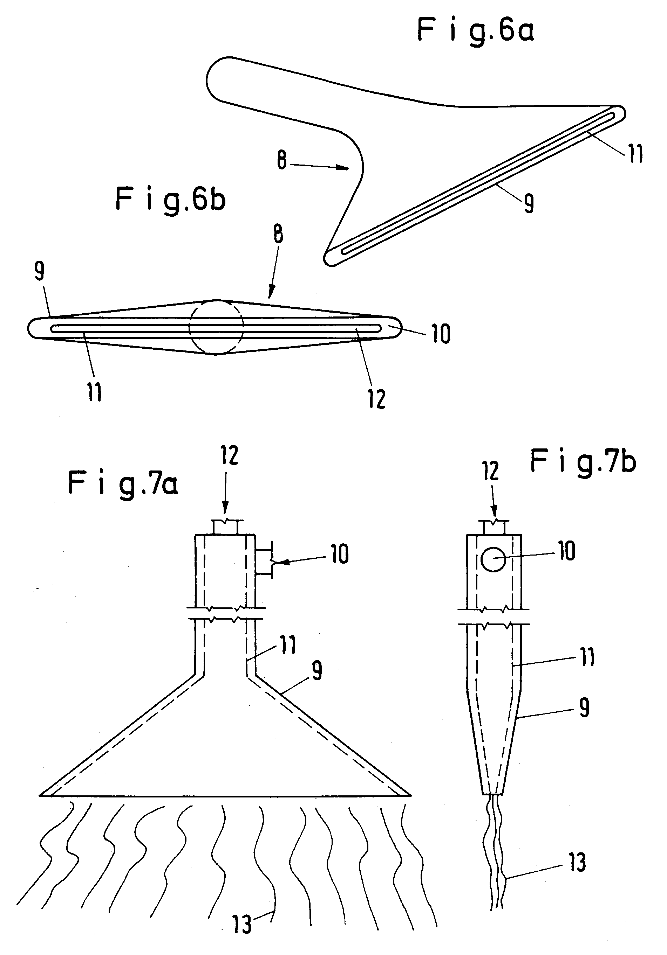

Alternativ dazu und wirdin Fig. 6a bis 6b dargestellt, werden statt jeweils einzelner Brenner 7 in Bündeln Ringspalt-Längsschlitzbrenner verwendet. Ausgehend von rohrförmigen Zuführungsquerschnitten fächern sich jeweils gasführende Schlitze für Erdgas außen und Sauerstoff innen auf, wobei die Auffächerung einer möglichst weitgehenden flächendeckenden Flammenausbildung entspricht und die Ringspaltdicke die Flammenlänge und Energiebeaufschlagung limitiert.

Fig. 6a stellt die perspektivische Ansicht eines Längsschlitzbrenners 8 dar, bei dem der Außenmantel der Ausweitung des Außenrohres 9 und die Innenführung aus der Ausweitung des Innenrohres 11 besteht. Diese bilden schlitzförmig umlaufende Kanäle für Erdgas 10 und Sauerstoff 12. Der Längsschlitzbrenner 8 ermöglicht eine fächerförmige Zuführung des Brennstoffes außen und des Sauerstoffes innen.

Fig. 6b stellt eine Frontansicht des Längsschlitzbrenners gemäß Fig. 6a dar. Nach Fig. 7a und Fig. 7b wird über das Innenrohr 11 Sauerstoff und über das Außenrohr 9 Erdgas eingegeben, wobei die Gaszuführungsquerschnitt in etwa gleichbleibende Austrittsquerschnitte aufweisen.

Die Vorwärmbrenner werden alternativ während der Frischperiode zum Frischen mit Sauerstoff benutzt, wobei wie beim Vorwärmen in der inneren Zuführung 12 jeweils Sauerstoff bzw. Luft angeboten wird und im äußeren Ringspalt 10 die für die Kühlung notwendige Mindestmenge an Erdgas. Wenn die alternative Frischwirkung über die Brenner nicht angestrebt wird, werden die Brenner mit Stickstoff bzw. Luft gekühlt bzw. vor dem Zusetzen durch Schlacke oder Metallspritzer bewahrt.

## Patentansprüche

1. Verfahren zur Schrottsatzerhöhung bei Konverterverfahren (LD, OBM oder dgl.) durch Vorwärmen von Schrott im Konverter,
dadurch gekennzeichnet,
daß ungekühlte Parallelstrahl-Ringspalt- oder Längschlitz-Vorwärmbrenner mit äußerer Brennstoff- und innerer Sauerstoffzufuhr von der Seite gegenüberliegend um den Zapfen herum im unteren Bereich des Konverters über dem Badspiegel der stehenden flüssigen Metallschmelze die Schüttung durch eine aufgefächerte Flammenführung erwärmen.

2. Verfahren nach Anspruch 1,
dadurch gekennzeichnet,
daß als Brennstoff Erdgas zugeführt wird.

3. Verfahren nach Anspruch 1 oder 2,
dadurch gekennzeichnet,
daß die Brenner während des Sauerstofffrischens unter minimaler Stickstoff- bzw. Luftbeaufschlagung gekühlt und betriebsbereit gehalten werden.

4. Verfahren nach einem der Ansprüche 1 bis 3,
dadurch gekennzeichnet,
daß mehrere Ringspaltbrenner in einem Brennerbündel zusammengefaßt sind und die Einzelbrenner im Bündel jeweils seilartig gegeneinander so verdrillt sind, daß die Auffächerung der Einzelflammen zur flächendeckenden Beaufschlagung des Schrottquerschnittes sich aus dem wählbaren Grad der Verdrillung ergibt.

5. Verfahren nach einem der Ansprüche 1 bis 3,
dadurch gekennzeichnet,
daß die im Bündel zusammengefaßten Ringspaltbrenner in einer Ebene fächerartig gespreizt werden und die Auffächerung eine möglichst gleichmäßige Beaufschlagung des Schüttquerschnittes ergibt.

6. Verfahren nach einem der Ansprüche 1 bis 5,
dadurch gekennzeichnet,
daß ausgehend von rohrförmigen Zuführungen mit äußerer Erdgas-und innerer Sauerstofführung die Auffächerung der Flamme über einen in einer Ebene gespreizten Schlitzbrenner erfolgt.

7. Verfahren nach einem der Ansprüche 1 bis 6,
dadurch gekennzeichnet,
daß die über dem Bad angeordneten Vorwärmbrenner schräg in Richtung Konverterboden brennen.

8. Verfahren nach einem der Ansprüche 1 bis 7,
dadurch gekennzeichnet,
daß während des Sauerstofffrischens durch Luft- oder Sauerstoffzufuhr über die Brenner die CO-Nachverbrennung begünstigt und die Frischintensität erhöht wird.

9. Konverter mit Vorwärmbrennern oberhalb des Badspiegels, wobei die Vorwärmbrenner Parallelstrahl-Ringspalt- bzw. Längsschlitzbrenner mit äußerer Erdgas- und innerer Sauerstoffzuführung sind, die von der Seite gegenüberliegend um den Zapfen herum im unteren Bereich des Konverters über dem Badspiegel der stehenden flüssigen Metallschmelze angeordnet sind,
dadurch gekennzeichnet,
daß die ungekühlten Ringspaltbrenner (7) zum Vorwärmen in einem Brennerbündel (14) zusammengefaßt sind und die einzelnen Ringspaltbrenner (7) im Bündel (14) jeweils seilartig gegeneinander so verdrillt sind, daß die Auffächerung der Einzelflammen (13) sich aus dem wählbaren Grad der Verdrillung (15) ergibt.

10. Konverter mit Vorwärmbrennern oberhalb des Badspiegels, wobei die Vorwärmbrenner Parallelstrahl-Ringspalt- bzw. Längsschlitzbrenner mit äußerer Erdgas- und innerer Sauerstoffzuführung sind, die von der Seite gegenüberliegend um den Zapfen herum im unteren Bereich des Konverters über dem Badspiegel der stehenden flüssigen Metallschmelze angeordnet sind,
dadurch gekennzeichnet,
daß die ungekühlten Ringspaltbrenner (7) zum Vorwärmen in einem Brennerbündel (14) zusammengefaßt sind und daß die im Bündel (14) zusammengefaßten Ringspaltbrenner (7) in einer Ebene fächerartig (16) gespreizt sind.

11. Konverter nach einem der Ansprüche 9 bis 10,
dadurch gekennzeichnet,
daß von ineinandergesteckten rohrförmigen Zuführungen (9, 11) für Erdgas und Sauerstoff die Brenner in einen zum Inneren des Konverters (1) ausgespreizten Längsschlitzbrenner (8) übergehen, bei dem innen (12) Sauerstoff und im äußeren Ringschlitz (10) Erdgas zugeführt werden.

12. Konverter nach einem der Ansprüche 9 bis 11,
dadurch gekennzeichnet
daß die über der Badoberfläche (6) angeordneten Vorwärmbrenner (2, 3, 7, 8, 14, 16) schräg in Richtung des Konverterbodens angeordnet sind.

## Claims

1. Method of increasing the proportion of scrap iron in converter processes (LD, OBM or the like) by pre-heating scrap iron in the converter, characterized in that uncooled parallel jet annular gap or annular slot pre-heating burners, which have an outer fuel supply and an inner oxygen supply and which lie laterally opposing one another around the tap in the lower region of the converter above the level of the bath of stationary liquid molten metal, heat the batch by means of a fanned-out guidance of flames.

2. Method according to Claim 1, characterized in that the fuel supplied is natural gas.

3. Method according to Claim 1 or 2, characterized in that during oxygen refining the burners are cooled and kept operational by means of nitrogen or air impinging to a minimum degree thereon.

4. Method according to one of Claims 1 to 3, characterized in that a plurality of annular gap burners are combined in a burner bundle and the individual burners in the bundle are each twisted with respect to one another in the manner of a rope such that the selectable degree of twisting results in fanning of the individual flames so as to impinge on the entire surface of the scrap iron cross-section.

5. Method according to one of Claims 1 to 3, characterized in that the annular gap burners combined in the bundle are spread in one plane in the manner of a fan and the fanning impinges as uniformly as possible on the batch cross-section.

6. Method according to one of Claims 1 to 5, characterized in that, starting from tubular supply lines having an outer guide for natural gas and an inner guide for oxygen the flame is fanned by means of a slot burner spread in one plane.

7. Method according to one of Claims 1 to 6, characterized in that the pre-heating burners arranged above the bath burn obliquely in the direction of the converter base.

8. Method according to one of Claims 1 to 7, characterized in that during oxygen refining the after-combustion of CO is promoted and the refining intensity increased by supplying air or nitrogen over the burners.

9. Converter having pre-heating burners above the level of the bath, the pre-heating burners being parallel jet annular gap or elongate slot burners which have an outer supply of natural gas and an inner supply of oxygen and which are arranged laterally opposing one another around the tap in the lower region of the converter above the level of the bath of the stationary liquid molten metal, characterized in that the uncooled annular gap burners (7) for the purpose of pre-heating are combined in a burner bundle (14) and the individual annular gap burners (7) in the bundle (14) are each twisted with respect to one another in the manner of a rope such that the fanning of the individual flames (13) is produced as a result of the selectable degree of twisting (15).

10. Converter having pre-heating burners above the level of the bath, the pre-heating burners being parallel jet annular gap or elongate slot burners which have an outer supply of natural gas and an inner supply of oxygen and which are arranged laterally opposing one another around the taps in the lower region of the converter above the level of the bath of the stationary liquid molten metal, characterized in that the uncooled annular gap burners (7) for the purpose of pre-heating are combined in a burner bundle (14), and in that the annular gap burners (7) combined in the bundle (14) are spread in one plane in the manner of a fan (16).

11. Converter according to one of Claims 9 to 10, characterized in that from tubular supply lines (9, 11) placed one inside the other for natural gas and oxygen the burners merge into an elongate slot burner (8) which is spread out towards the interior of the converter (1) and in which oxygen is supplied to the inside (12) and natural gas is supplied in the outer annular slot (10).

12. Converter according to one of Claims 9 to 11, characterized in that the pre-heating burners (2, 3, 7, 8, 14, 16) arranged above the surface (6) of the bath are arranged obliquely in the direction of the converter base.

## Revendications

1. Procédé pour, lors de procédés de convertissage (LD, OBM ou similaires), augmenter l'apport de ferrailles en réchauffant ces ferrailles dans le convertisseur,
**caractérisé** en ce que des brûleurs de réchauffage non refroidis, à jet parallèle à fente annulaire ou fente longitudinale avec alimentation externe en combustible et alimentation interne en oxygène, disposés par le côté en vis-à-vis tout autour du tourillon dans la région inférieure du convertisseur, au-dessus du niveau du bain de métal liquide en fusion immobilisé, réchauffent la charge par un guidage des flammes ouvert en éventail.

2. Procédé selon la revendication 1, **caractérisé** en ce que le combustible alimenté est du gaz naturel.

3. Procédé selon la revendication 1 ou 2 **caractérisé** en ce que les brûleurs sont pendant l'affinage à l'oxygène, refroidis et maintenus prêts à fonctionner avec un apport minimal d'azote ou d'air.

4. Procédé selon l'une quelconque des revendications 1 à 3, **caractérisé** en ce que plusieurs brûleurs à fente annulaire sont réunis en un faisceau de brûleurs, et les brûleurs individuels du faisceau sont mutuellement assemblés en toron, à la manière de câbles métalliques, de telle sorte que l'ouverture en éventail des flammes individuelles afin de solliciter la section des ferrailles en couvrant toute la superficie, s'obtient à partir du degré du toronnage, qui peut être choisi.

5. Procédé selon l'une quelconque des revendications 1 à 3, **caractérisé** en ce que les brûleurs à fente annulaire réunis en faisceau sont écartés en éventail dans un plan, et l'ouverture en éventail fournit une sollicitation la plus uniforme possible de la section de la charge.

6. Procédé selon l'une quelconque des revendications 1 à 5, **caractérisé** en ce qu'en partant d'alimentations tubulaires avec guidage extérieur du gaz naturel et guidage intérieur de l'oxygène l'ouverture en éventail des flammes s'effectue par l'intermédiaire d'un brûleur à fente évasé dans un plan.

7. Procédé selon l'une quelconque des revendications 1 à 6, **caractérisé** en ce que les brûleurs de réchauffage, disposés au-dessus du bain brûlent en oblique en direction du fond du convertisseur.

8. Procédé selon l'une quelconque des revendications 1 à 7, **caractérisé** en ce que, pendant l'affinage à l'oxygène, on favorise l'achèvement de la combustion du CO et on augmente l'intensité d'affinage à l'aide des brûleurs, par apport d'air ou d'oxygène.

9. Convertisseur avec des brûleurs de réchauffage au-dessus du niveau du bain, les brûleurs de réchauffage étant des brûleurs à jet parallèle, à fente annulaire ou fente longitudinale, avec alimentation externe en gaz naturel et alimentation interne en oxygène, qui sont disposés par le côté en vis-à-vis tout autour du tourillon dans la région inférieure du convertisseur, au-dessus du niveau du bain de métal liquide en fusion immobilisé,
**caractérisé** en ce que les brûleurs à fente annulaire non refroidis (7) sont réunis en un faisceau de brûleurs (14) en vue du réchauffage, et les brûleurs à fente annulaire individuels (7) du faisceau (14) sont mutuellement assemblés en toron, à la manière de câbles métalliques, de telle sorte que l'ouverture en éventail des flammes individuelles (13) s'obtient à partir du degré du toronnage (15), qui peut être choisi.

10. Convertisseur avec des brûleurs de réchauffage au-dessus du niveau du bain, les brûleurs de réchauffage étant des brûleurs à jet parallèle, à fente annulaire ou fente longitudinale, avec alimentation externe en gaz naturel et alimentation interne en oxygène, qui sont disposés par le côté en vis-à-vis tout autour du tourillon dans la région inférieure du convertisseur, au-dessus du niveau du bain de métal liquide en fusion immobilisé,
**caractérisé** en ce que les brûleurs à fente annulaire non refroidis (7) sont réunis en un faisceau de brûleurs (14) en vue du réchauffage, et en ce que les brûleurs à fente annulaire (7) réunis dans le faisceau (14) sont écartés en éventail (16) dans un plan.

11. Convertisseur selon la revendication 9 ou 10, **caractérisé** en ce qu'à partir d'alimentations tubulaires en gaz naturel et en oxygène (9, 11) emboîtées l'une dans l'autre, les brûleurs se raccordent en un brûleur à fente longitudinale (8), évasé vers l'intérieur du convertisseur (1), qui est alimenter intérieurement (12) en oxygène et dans la fente annulaire extérieure (10) en gaz naturel.

12. Convertisseur selon l'une quelconque des revendications 9 à 11, **caractérisé** en ce que les brûleurs de réchauffage (2, 3, 7, 8, 14, 15), disposés au-dessus de la surface (6) du bain, sont disposés en oblique en direction du fond du convertisseur.
